# EUROPÄISCHE PATENTSCHRIFT

(11) **EP 3 143 863 B1**
(45) Veröffentlichungstag und Bekanntmachung des Hinweises auf die Patenterteilung: **27.06.2018**
(21) Anmeldenummer: 16183203.5
(22) Anmeldetag: 08.08.2016
(51) Int. Cl.: A01D 41/14, A01D 75/20

(54) **SCHUTZVORRICHTUNG EINES VORSATZGERÄTS EINER ERNTEMASCHINE UND ERNTEMASCHINE MIT EINER SOLCHEN SCHUTZVORRICHTUNG**
PROTECTION DEVICE OF A HEADER OF A HARVESTER AND HARVESTER WITH SUCH A PROTECTION DEVICE
DISPOSITIF DE PROTECTION DE BEC CUEILLEUR D'UNE MOISSONNEUSE ET MOISSONNEUSE COMPRENANT UN TEL DISPOSITIF DE PROTECTION

(30) Priorität: 14.08.2015 DE 102015113470
(43) Veröffentlichungstag der Anmeldung: 22.03.2017
(73) Patentinhaber: CLAAS Saulgau GmbH, 88348 Bad Saulgau (DE)
(72) Erfinder: Valtwies, Bernd, 88250 Weingarten (DE); Fischer, Josef, 88447 Warthausen (DE); Kleck, Jens, 72501 Gammertingen (DE)

(56) Entgegenhaltungen:
- EP-A1- 2 896 285
- DE-A1-102013 001 651
- DE-A1-102013 111 669
- US-A1- 2009 277 150

## Beschreibung

Die Erfindung betrifft eine Schutzvorrichtung eines Vorsatzgeräts einer Erntemaschine nach dem Oberbegriff des Anspruchs 1. Des Weiteren betrifft die Erfindung eine Erntemaschine mit einer solchen Schutzvorrichtung.

Aus der DE 10 2013 001 651 A4 ist eine als Feldhäcksler ausgebildete Erntemaschine mit einem als Maisgebiss ausgebildeten Vorsatzgerät und einer Schutzvorrichtung für das Vorsatzgerät bekannt. Das Vorsatzgerät verfügt über mehrere relativ zueinander verlagerbare Vorsatzgerätabschnitte, nämlich einen mittleren, feststehenden Vorsatzgerätabschnitt, der auch als Mittelmulde bezeichnet wird, sowie zu beiden Seiten des mittleren Vorsatzgerätabschnitts jeweils mindestens einen seitlichen, verlagerbaren Vorsatzgerätabschnitt, der auch als Ausleger bezeichnet wird. In einer Erntestellung des Vorsatzgeräts ist dasselbe ausgeklappt und sämtliche Vorsatzgerätabschnitte sind quer zur Fahrtrichtung des Vorsatzgeräts gesehen, nebeneinander positioniert. In einer Transportstellung des Vorsatzgeräts sind die Ausleger in eine Position verschwenkt, in welcher dieselben oberhalb der Mittelmulde positioniert sind. Die Schutzvorrichtung für das Vorsatzgerät nimmt in der Erntestellung des Vorsatzgeräts eine Ruheposition und in der Transportstellung des Vorsatzgeräts eine Funktionsposition ein, wobei die Schutzvorrichtung in der Funktionsposition das Vorsatzgerät vorne und seitlich abdeckt, nämlich Mäh- und Einzugsorgane des Vorsatzgeräts. Die Schutzvorrichtung umfasst mehrere Segmente, die um eine vertikal verlaufende Achse und um eine horizontal verlaufende Achse relativ zueinander schwenkbar sind, wobei in der Ruheposition der Schutzvorrichtung die Segmente hinter den Auslegern positioniert sind. Horizontal verlaufende Achsen, um welche die Segmente zueinander schwenkbar sind, verlaufen entweder in Fahrtrichtung des Erntefahrzeugs oder quer zur Fahrtrichtung des Erntefahrzeugs, wobei die quer zur Fahrtrichtung des Erntefahrzeugs verlaufende, horizontale Achse beim Schwenken vor einer vorderen Kante der Mäh- und Einzugsorgane des Vorsatzgeräts positioniert ist.

Hiervon ausgehend liegt der vorliegenden Erfindung die Aufgabe zugrunde, eine neuartige Schutzvorrichtung eines Vorsatzgeräts einer Erntemaschine sowie eine Erntemaschine mit einer solchen Schutzvorrichtung zu schaffen.

Diese Aufgabe wird durch eine Schutzvorrichtung nach Anspruch 1 gelöst. Die erfindungsgemäße Schutzvorrichtung weist eine Abdeckeinrichtung zur Begrenzung bzw. Abdeckung der Mäh- und Einzugsorgane in der Funktionsposition und eine Verlagerungseinrichtung zur Verlagerung der Abdeckeinrichtung zwischen der Funktionsposition und der Ruheposition auf, wobei die Verlagerungseinrichtung um zumindest eine Drehachse drehbar ist, die horizontal und quer zur Ernterichtung verläuft sowie hinter einer vorderen Kante der Mäh- und Einzugsorgane des Vorsatzgeräts positioniert ist, und wobei die Abdeckeinrichtung in der Ruheposition in einem hinteren Abschnitt einer Mittelmulde des Vorsatzgeräts oberhalb derselben abgelegt ist.

Durch die erfindungsgemäße Positionierung der horizontal und quer zur Fahrtrichtung verlaufenden Drehachse der Verlagerungseinrichtung hinter der vorderen Kante der Mäh- und Einzugsorgane des Vorsatzgeräts sowie durch die definierte Ablageposition der Abdeckeinrichtung in der Ruheposition der Schutzvorrichtung kann dieselbe sehr bauraumsparend und leicht ausgeführt werden. In der Ruheposition der Schutzvorrichtung ist Zugänglichkeit des Vorsatzgeräts, insbesondere der seitlichen Vorsatzgerätabschnitte bzw. der Ausleger, nicht eingeschränkt.

Nach einer ersten vorteilhaften Weiterbildung der Erfindung weist die Verlagerungseinrichtung mindestens ein, vorzugsweise zu beiden Seiten der Abdeckeinrichtung jeweils mindestens ein, teleskopartig verstellbares Verlagerungselement auf, welches an einem ersten Ende um die horizontal und quer zur Fahrtrichtung sowie hinter der vorderen Kante der Mäh- und Einzugsorgane positionierte Drehachse schwenkbar ist, und welches an einem zweiten Ende an der Abdeckeinrichtung angreift. Durch die Verwendung teleskopartig verstellbarer Verlagerungselemente kann eine besonders vorteilhafte Ruheposition für die Schutzvorrichtung realisiert werden. In diesem Fall sind in der Ruheposition der Schutzvorrichtung sowohl die Abdeckeinrichtung als auch die Verlagerungseinrichtung derselben in einem hinteren Bereich der Mittelmulde positioniert.

Als teleskopartig verstellbares Verlagerungselement kann im Sinne der Erfindung prinzipiell jedes in der Länge verstellbares Element vorgesehen werden. Neben den beispielhaft genannten Teleskopstangen können beispielsweise auch sich scherenartig oder über einen Knickmechanismus verlängernde bzw. verkürzende Verlagerungselemente vorgesehen werden.

Vorzugsweise ist nach der ersten Weiterbildung der Erfindung die Abdeckeinrichtung ein Rollo oder Plane oder Folie. Die Verwendung eines Rollos, einer Plane oder Folie als Abdeckeinrichtung erlaubt eine besonders bauraumsparende und leichte Ausführung der Schutzvorrichtung

Nach einer zweiten vorteilhaften Weiterbildung der Erfindung ist die Verlagerungseinrichtung ein Verlagerungsgestänge, welches mindestens zwei Lenker aufweist, nämlich einen ersten Lenker der mit einem Ende gelenkig an der Mittelmulde angreift und um eine erste horizontal und quer zur Fahrtrichtung verlaufende sowie hinter einer vorderen Kante der Mäh- und Einzugsorgane des Vorsatzgeräts positionierte Drehachse schwenkbar ist, sowie einen zweiten Lenker, der mit einem ersten Ende an einem mittleren Abschnitt des ersten Lenkers angreift und um eine zweite horizontal und quer zur Fahrtrichtung verlaufende sowie hinter einer vorderen Kante der Mäh- und Einzugsorgane des Vorsatzgeräts positionierte Drehachse schwenkbar ist, wobei die Abdeckeinrichtung an den Lenkern angreift. Auch mit dieser Weiterbildung der Erfindung kann eine besonders vorteilhafte Ruheposition der Schutzvorrichtung bereitgestellt werden. Die Abdeckeinrichtung ist in der Ruheposition der Schutzvorrichtung in einem hinteren Bereich der Mittelmulde abgelegt. Die Verlagerungseinrichtung der Schutzvorrichtung erstreckt sich in der Ruheposition von der abgelegten Abdeckeinrichtung aus abschnittsweise nach vorne.

Vorzugsweise weist nach der zweiten Weiterbildung der Erfindung die Abdeckeinrichtung mehrere gelenkig verbundene Abdecksegmente auf, von welchen ein erstes Abdecksegment gelenkig an einem zweiten Ende des ersten Lenkers und von denen ein zweites Abdecksegment gelenkig an einem zweiten Ende des zweiten Lenkers angreift. Dies erlaubt eine vorteilhafte Verlagerung der Abdeckeinrichtung über das Verlagerungsgestänge.

Die erfindungsgemäße Erntemaschine ist in Anspruch 11 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigen:
- Fig. 1a bis 1h: unterschiedliche Ansichten einer Erntemaschine mit einem Vorsatzgerät und einer ersten erfindungsgemäßen Schutzvorrichtung für das Vorsatzgerät;
- Fig. 2a bis 2e: unterschiedliche Ansichten einer Erntemaschine mit einem Vorsatzgerät und einer zweiten erfindungsgemäßen Schutzvorrichtung für das Vorsatzgerät; und
- Fig. 3a bis 3j: unterschiedliche Ansichten einer Erntemaschine mit einem Vorsatzgerät und einer dritten erfindungsgemäßen Schutzvorrichtung für das Vorsatzgerät.

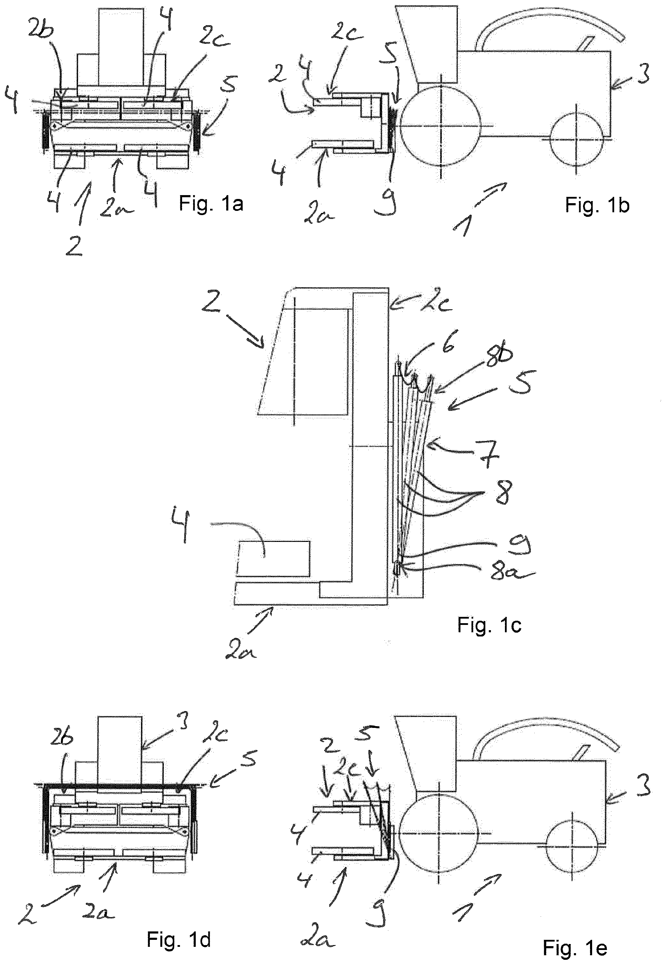

Fig. 1a bis 1h zeigen ein erstes Ausführungsbeispiel der Erfindung. So ist in Fig. 1a bis 1h eine als Feldhäcksler ausgebildete Erntemaschine 1 gezeigt, die ein Trägerfahrzeug 3 sowie ein am Trägerfahrzeug 3 befestigtes und als Maisgebiss ausgestaltetes Vorsatzgerät 2 umfasst. Das Vorsatzgerät 2 verfügt über mehrere Vorsatzgerätabschnitte, die zur Verlagerung des Vorsatzgeräts 2 zwischen einer Erntestellung und einer Transportstellung relativ zueinander verlagerbar sind, wobei Fig. 1a bis 1h das Vorsatzgerät 2 jeweils ausschließlich in der Transportstellung zeigen.

Das Vorsatzgerät 2 verfügt über einen mittleren Vorsatzgerätabschnitt 2a, der feststehend ausgeführt ist und als Mittelmulde bezeichnet wird. Zu beiden Seiten dieser Mittelmulde 2a ist jeweils mindestens ein Vorsatzgerätabschnitt 2b, 2c angeordnet, die auch als Ausleger bezeichnet werden, wobei die Ausleger 2b, 2c relativ zur Mittelmulde 2a geschwenkt werden können, um das Vorsatzgerät 2 zwischen der Erntestellung und der Transportstellung zu überführen. In der nicht gezeigten Erntestellung sind quer zur Fahrtrichtung des Erntefahrzeugs 1 gesehen die Ausleger 2b, 2c seitlich neben der Mittelmulde 2a positioniert. In der gezeigten Transportstellung des Vorsatzgeräts 2 hingegen sind die Ausleger 2b, 2c derart geschwenkt, dass dieselben oberhalb der Mittelmulde 2a angeordnet sind.

Das Vorsatzgerät 2 umfasst mehrere Mäh- und Einzugsorgane 4, die dem Trennen und Fördern von Erntegut dienen. Jeder Vorsatzgerätabschnitt 2a, 2b, 2c des Vorsatzgeräts 2 trägt mindestens ein derartiges Mäh- und Einzugsorgan 4.

Die Erntemaschine 1 verfügt weiterhin über einen Schutzvorrichtung 5 für das Vorsatzgerät 2. Dann, wenn das Vorsatzgerät 2 die Erntestellung einnimmt, nimmt die Schutzvorrichtung 5 die Ruheposition ein und gibt die Mäh- und Einzugsorgane 4 des Vorsatzgeräts 2 frei. Dann hingegen, wenn das Vorsatzgerät 2 die Transportstellung einnimmt, nimmt die Schutzvorrichtung 5 vorzugsweise eine Funktionsposition ein, in welcher die Schutzvorrichtung 5 die Mäh- und Einzugsorgane 4 des Vorsatzgeräts 2 zumindest in Fahrtrichtung der Erntemaschine 1 gesehen, vorne begrenzt bzw. abdeckt.

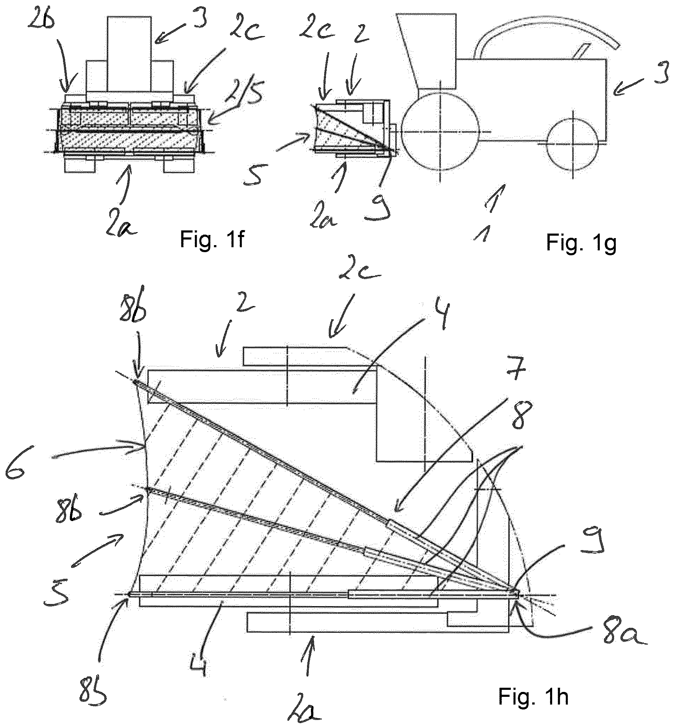

Die Schutzvorrichtung 5 weist eine Abdeckeinrichtung 6 sowie eine Verlagerungseinrichtung 7 zur Verlagerung der Abdeckeinrichtung 6 auf. Die Abdeckeinrichtung 6 dient der Begrenzung bzw. Abdeckung der Mäh- und Einzugsorgane 4 des Vorsatzgeräts 2 in der Transportstellung des Vorsatzgeräts 2, nämlich dann, wenn in der Transportstellung des Vorsatzgeräts 2 die Schutzvorrichtung 5 aus ihrer Ruheposition heraus (siehe Fig. 1a, 1b und 1c) in ihre Funktionsposition (siehe Fig. 1f, 1g und 1h) verlagert ist.

Fig. 1d und 1e zeigen eine Zwischenposition der Schutzvorrichtung 5, die dieselbe bei der Verlagerung zwischen der Ruheposition und der Funktionsposition einnehmen kann.

Die Verlagerungseinrichtung 7, die im Ausführungsbeispiel der Fig. 1a bis 1h zu beiden Seiten der Abdeckeinrichtung 6 mehrere teleskopartig verstellbare Verlagerungselemente 8 umfasst, ist bei der Überführung der Schutzvorrichtung 5 zwischen der Ruheposition und der Funktionsposition um eine Drehachse 9 drehbar bzw. verlagerbar, die horizontal und quer zur Fahrtrichtung der Erntemaschine verläuft sowie hinter einer vorderen Kante der Mäh- und Einzugsorgane 4 des Vorsatzgeräts 2 positioniert ist. Die Lage dieser Drehachse 9 ist dabei fest, also nicht veränderbar.

In der Ruheposition (siehe Fig. 1a, 1b und 1c) ist die Abdeckeinrichtung 6 der Schutzvorrichtung 5 in einem hinteren Abschnitt der Mittelmulde 2a des Vorsatzgeräts 2 oberhalb derselben abgelegt und gibt die Mäh- und Einzugsorgane 4 in dieser Ruheposition frei.

Wie bereits ausgeführt, umfasst die Verlagerungseinrichtung 7 der Schutzvorrichtung 5 des Ausführungsbeispiels der Fig. 1a bis 1h zu beiden Seiten der Abdeckeinrichtung 6 mehrere, nämlich im gezeigten Ausführungsbeispiel drei, teleskopartig verstellbare Verlagerungselemente 8 in Form von Teleskopzylindern. Jeder dieser Teleskopzylinder 8 ist an einem ersten Ende 8a um die horizontal und quer zur Fahrtrichtung sowie hinter den Mäh- und Einzugsorganen 4 positionierte Drehachse 9 schwenkbar, wobei an einem zweiten Ende 8b dieser Teleskopzylinder 9 die Abdeckeinrichtung 6 angreift.

Dabei ist im Ausführungsbeispiel der Fig. 1a bis 1h die Abdeckeinrichtung 6 als Plane oder Folie ausgeführt, die ausschließlich an den zweiten Enden 8b der teleskopartig verstellbaren Verlagerungselemente 8 angreift bzw. angebunden ist. In Fig. 1f und 1h wird die Plane oder Folie durch eine Schraffur in gestrichelter Linienführung visualisiert, wobei Fig. 1g und 1h entnommen werden kann, dass die Plane bzw. Folie in der Funktionsposition der Schutzvorrichtung 5 die Mäh- und Einzugsorgane 4 des Vorsatzgeräts 2 vorne sowie zusätzlich zumindest abschnittsweise seitlich begrenzt bzw. abdeckt.

Es ist auch eine Ausführung denkbar, in welcher zusätzlich zu den drei gezeigten teleskopartigen Verlagerungselementen 8 weitere teleskopartige Verlagerungselemente vorhanden sind, die in der Funktionsposition der Schutzvorrichtung 5 weiter nach hinten in Richtung auf den hinteren Abschnitt der Mittelmulde 2a verlagert sind, wobei dann die Plane oder Folie die Mäh- und Einzugsorgane 4 bzw. das Vorsatzgerät 2 auch zumindest abschnittsweise oben begrenzen bzw. abdecken kann.

Wie am besten Fig. 1c entnommen werden kann, die das Vorsatzgerät 2 in der Transportstellung und die Schutzvorrichtung 5 in der Ruheposition zeigt, sind im Ausführungsbeispiel der Fig. 1a und 1h sowohl die Verlagerungseinrichtung 7 als auch die Abdeckeinrichtung 6 der Schutzvorrichtung 5 in der Ruheposition in einem hinteren Abschnitt der Mittelmulde 2 positioniert, wobei die Abdeckeinrichtung 6 in diesem hinteren Abschnitt der Mittelmulde 2 oberhalb der Mittelmulde 2a abgelegt ist.

Die teleskopartigen Verlagerungselemente 8 der Schutzvorrichtung 5 sind zu beiden Seiten der Mittelmulde 2a positioniert und an derselben um die Achse 9 drehbar gelagert. Um demnach im Ausführungsbeispiel der Fig. 1a bis 1h die Schutzvorrichtung 5 zwischen ihrer Ruheposition und ihrer Funktionsposition überführen zu können, muss das Vorsatzgerät 2 die Transportstellung einnehmen. Soll in der Transportstellung des Vorsatzgeräts 2 die Schutzvorrichtung 5 ausgehend von der insbesondere in Fig. 1c gezeigten Ruheposition in die insbesondere in Fig. 1h gezeigte Funktionsposition überführt werden, so werden zunächst die teleskopartigen Verlagerungselemente 8b ausgefahren, um die Abdeckeinrichtung 6 der Schutzvorrichtung 5 anzuheben, wobei dann, wenn hierbei die Abdeckeinrichtung 6 eine ausreichende Höhe erreicht hat, die teleskopartigen Verlagerungselemente 8 um die Drehachse 9 nach vorne geschwenkt werden. Bei dieser Schwenkbewegung kann sich, abhängig von den Abmessungen des Vorsatzgeräts 2, insbesondere abhängig von den Abmessungen der Mäh- und Einzugsorgane 4, die radiale Position der Abdeckeinrichtung 6 bezogen auf die Drehachse 9 durch stärkeres Ausfahren oder Einfahren der Teleskopzylinder 8 ändern, um einerseits die Mäh- und Einzugsorgane 4 bei der Verlagerung der Schutzvorrichtung 5 nicht zu berühren und um andererseits in der Funktionsposition der Fig. 1h die Abdeckeinrichtung 6 zu spannen und demnach straff zu halten.

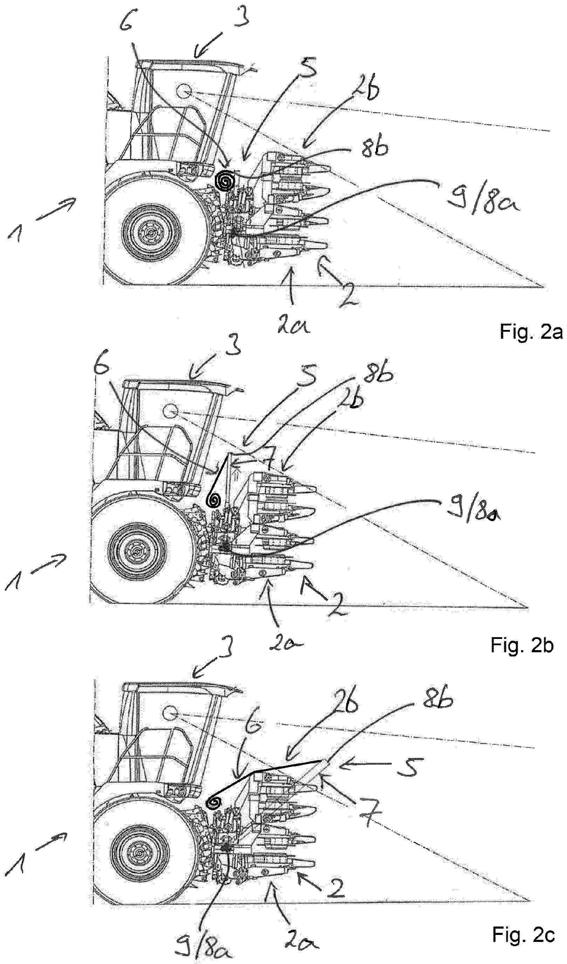

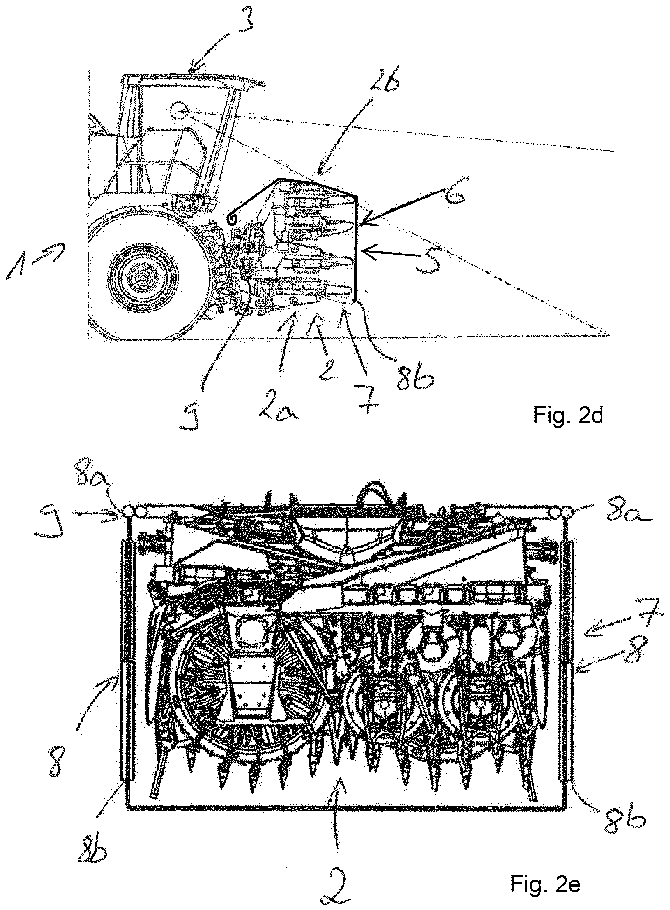

Ein weiteres Ausführungsbeispiel einer erfindungsgemäßen Schutzvorrichtung 5 zeigen Fig. 2a bis 2e. Zur Vermeidung unnötiger Wiederholungen werden für gleiche Baugruppen gleiche Bezugsziffern verwendet und es wird nachfolgend nur auf solche Details eingegangen, durch die sich das Ausführungsbeispiel der Fig. 2a bis 2e vom Ausführungsbeispiel der Fig. 1a bis 1h unterscheidet.

Auch im Ausführungsbeispiel der Fig. 2a bis 2e umfasst die Schutzvorrichtung 5 eine Abdeckeinrichtung 6 und eine Verlagerungseinrichtung 7, wobei im Ausführungsbeispiel der Fig. 2a bis 2e zu beiden Seiten der Abdeckeinrichtung 6 und damit zu beiden Seiten der Mittelmulde 2a jeweils ein einziges, teleskopartig verstellbares Verlagerungselement 8 positioniert ist, welches an einem ersten Ende 8a um die horizontal und quer zur Fahrtrichtung sowie hinter den Mäh- und Einzugsorganen 4 positionierte Drehachse 9 schwenkbar ist, und welches an dem zweiten Ende 8b derselben an der Abdeckeinrichtung 6 angreift.

Im Ausführungsbeispiel der Fig. 2a bis 2e ist die Abdeckeinrichtung 6 als Rollo ausgeführt, welches mit einem ersten Ende an eine feststehende Rolloachse angebunden ist, und welches mit einem zweiten Ende am zweiten Ende 8b der Verlagerungselemente 8 befestigt ist. Im Ausführungsbeispiel der Fig. 2a bis 2e deckt das Rollo in der Funktionsposition der Schutzvorrichtung 5 das Vorsatzgerät 2 und damit die Mäh- und Einzugsorgane 4 desselben vorne und oben, jedoch nicht seitlich ab.

Zur Überführung der Schutzvorrichtung 5 des Ausführungsbeispiels der Fig. 2a bis 2e zwischen der Ruheposition und der Funktionsposition muss das Vorsatzgerät 2 wiederum seine Transportstellung einnehmen. Befindet sich das Vorsatzgerät 2 in seiner Transportstellung und nimmt ferner die Schutzvorrichtung 5 ihre Ruhposition ein (siehe Fig. 2a), so wird zur Überführung der Schutzvorrichtung 5 in ihre Funktionsposition zunächst an beiden Seiten der Mittelmulde 2a das jeweilige teleskopartige Verlagerungselement 8 ausgefahren bzw. verlängert, zunächst in die Zwischenposition der Fig. 2b, wobei hierbei die rolloartige Abdeckeinrichtung 6 bereits teilweise abgewickelt wird. Nachfolgend werden die teleskopartigen Verlagerungselemente 8 um die horizontal sowie quer zur Fahrtrichtung der Erntemaschine verlaufende sowie hinter den Mäh- und Einzugsorganen 4 positionierte Drehachse 9 geschwenkt, und zwar über die in Fig. 2c gezeigte Position in die in Fig. 2d gezeigte Funktionsposition. Wie bereits ausgeführt, deckt dann die rolloartige Abdeckeinrichtung 6 das Vorsatzgerät 2 bzw. die Mäh- und Einzugsorgane 4 desselben oben sowie vorne ab.

Das Rollo kann auch mit der Rollachse über das Vorsatzgerät gezogen werden. Dazu wird die Rollachse am zweiten Ende 8b des Verlagerungselements 8 angeordnet und das zweite Ende des Rollos wird an der Mittelmulde fixiert. Die Überführung der Schutzvorrichtung 5 in ihre Funktionsposition erfolgt wie oben beschrieben.

Wie im Ausführungsbeispiel der Fig. 1a bis 1h kann sich auch im Ausführungsbeispiel der Fig. 2a bis 2e die Ausfahrposition bzw. die Länge der teleskopartigen Verlagerungselemente 8 bei der Überführung der Schutzvorrichtung 5 von der Ruheposition in die Funktionsposition sowie umgekehrt von der Funktionsposition in die Ruheposition ändern, um die rolloartige Abdeckeinrichtung 6 jeweils mit ausreichendem Abstand an den Mäh- und Einzugsorganen 4 des Vorsatzgeräts 2 vorbeizubewegen, und um in der Ruhestellung die Abdeckeinrichtung 6 platzsparend im Bereich der Mittelmulde, nämlich in einem hinteren Abschnitt derselben, oberhalb derselben abzulegen, und um in der Funktionsposition die Abdeckeinrichtung 6 straff und kompakt um das Vorsatzgerät 2 herum zu halten bzw. zu spannen.

Den Ausführungsbeispielen der Fig. 1a bis 1h sowie 2a bis 2e ist gemeinsam, dass die Verlagerungseinrichtung 7 der Schutzvorrichtung 5 um eine Drehachse 9 verlagerbar ist, die sich horizontal und quer zur Fahrtrichtung der Erntemaschine erstreckt und permanent hinter der vorderen Kante der Mäh- und Einzugsorgane 4 des Vorsatzgeräts 2 positioniert ist, nämlich vollständig hinter den Mäh- und Einzugsorganen 4 im hinteren Abschnitt der Mittelmulde 2a des Vorsatzgeräts 2, und wobei ferner die Abdeckeinrichtung 6 der Schutzvorrichtung 5 in der Ruheposition jeweils im hinteren Abschnitt der Mittelmulde 2a des Vorsatzgeräts 2 oberhalb der Mittelmulde 2a abgelegt ist und dann in dieser Ruheposition die Mäh- und Einzugsorgane 4 freigibt.

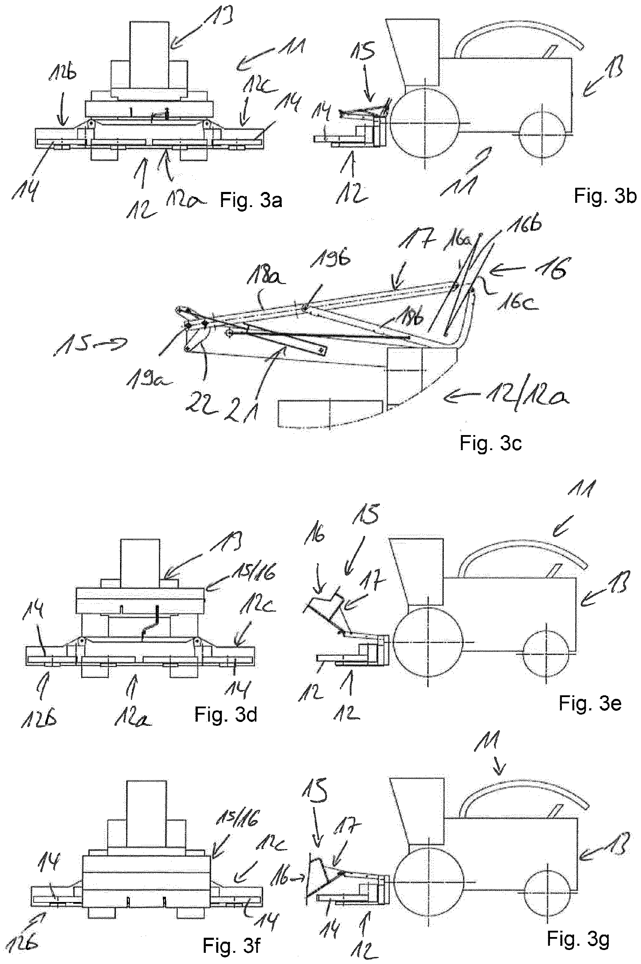

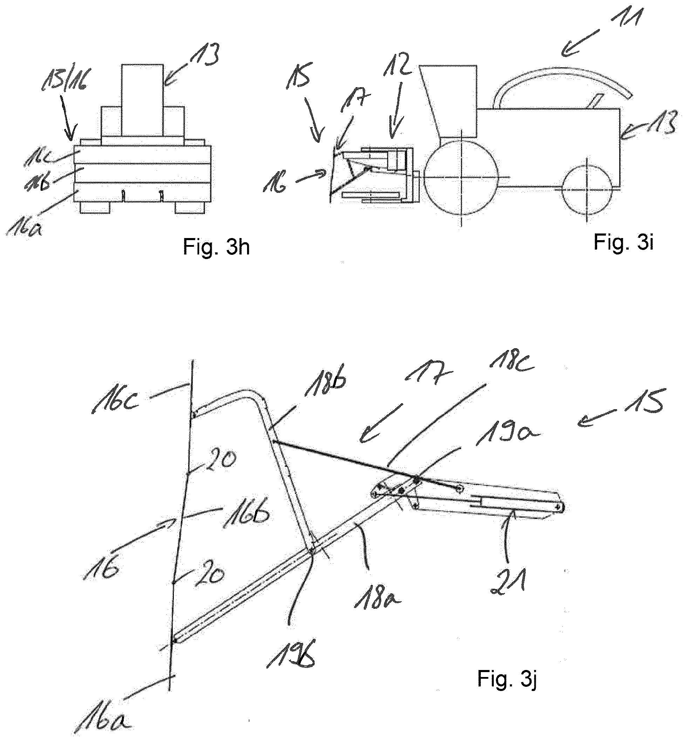

Ein weiteres Ausführungsbeispiel der Erfindung zeigen Fig. 3a bis 3j. So ist in Fig. 3a bis 3j wiederum eine Erntemaschine 11 mit einem Vorsatzgerät 12 und einem Trägerfahrzeug 13 gezeigt, wobei auch das Vorsatzgerät 12 des Ausführungsbeispiels der Fig. 3a bis 3j die feststehende Mittelmulde 12a sowie zu beiden Seiten der feststehenden Mittelmulde 12a jeweils mindestens einen Ausleger 12b, 12c aufweist, der zur Überführung des Vorsatzgeräts 12 zwischen der Transportstellung und der Erntestellung relativ zur Mittelmulde 12a verlagerbar ist. In den Fig. 3a bis 3g ist die Erntemaschine in der Erntestellung des Vorsatzgeräts 2 und in den Fig. 3h bis 3i in der Transportstellung des Vorsatzgeräts 12 gezeigt.

Auch im Ausführungsbeispiel der Fig. 3a bis 3j umfasst das Vorsatzgerät im Bereich jedes Vorsatzgerätabschnitts 12a, 12b, 12c jeweils mindestens ein Mäh- und Einzugsorgan 14.

Die Erntemaschine 11 im Ausführungsbeispiel der Fig. 3a bis 3j verfügt wiederum über eine Schutzvorrichtung 15, welche zwischen einer Ruheposition und einer Funktionsposition überführt werden kann, und zwar derart, dass die Schutzvorrichtung 15 insbesondere in der Erntestellung des Vorsatzgeräts 12 die Ruheposition einnimmt und in der Ruheposition die Mäh- und Einzugsorgane 14 des Vorsatzgeräts 12 freigibt, wohingegen die Schutzvorrichtung 15 in der Funktionsposition, insbesondere dann, wenn das Vorsatzgerät 12 die Transportstellung einnimmt, das Vorsatzgerät 12, nämlich die Mäh- und Einzugsorgane 14 desselben, zumindest vorne begrenzt bzw. abdeckt.

Die Schutzvorrichtung 15 des Ausführungsbeispiels der Fig. 3a bis 3g verfügt wiederum über eine Abdeckeinrichtung 16 sowie eine Verlagerungseinrichtung 17. Um die Schutzvorrichtung 15, nämlich die Abdeckeinrichtung 16 derselben, zwischen der Ruheposition (siehe Fig. 3a, 3b und 3c) und der Funktionsposition (siehe Fig. 3h, 3i und 3j) zu verlagern, ist die Verlagerungseinrichtung 17 um mindestens eine horizontal und quer zur Fahrtrichtung verlaufende Drehachse 19a, 19b verlagerbar, die hinter einer vorderen Kante der Mäh- und Einzugsorgane 14 des Vorsatzgeräts 12 positioniert ist.

Die Abdeckeinrichtung 16 ist, wie Fig. 3c am besten entnommen werden kann, in der Ruheposition in einem hinteren Abschnitt der Mittelmulde 12a des Vorsatzgeräts 12 oberhalb desselben abgelegt und gibt in dieser Ruheposition die Mäh- und Einzugsorgane 14 des Vorsatzgeräts 12 frei.

Im Ausführungsbeispiel der Fig. 3a bis 3j ist die Verlagerungseinrichtung 17 der Schutzvorrichtung 15 als ein Verlagerungsgestänge ausgebildet, welches mindestens zwei Lenker aufweist, nämlich einen ersten Lenker 18a, der mit einem ersten Ende gelenkig an der Mittelmulde 12a angreift und um eine erste horizontale und quer zur Fahrtrichtung verlaufende sowie hinter der vorderen Kante der Mäh- und Einzugsorgane 14 des Vorsatzgeräts 12 positionierte Drehachse 19a schwenkbar ist, sowie einen zweiten Lenker 18b, der mit einem ersten Ende an einem mittleren Abschnitt des ersten Lenkers 18a angreift und um eine zweite horizontale und quer zur Fahrtrichtung verlaufende sowie hinter der vorderen Kante der Mäh- und Einzugsorgane 14 des Vorsatzgeräts 12 positionierte Drehachse 19b schwenkbar ist.

Der erste Lenker 18a verfügt dabei vorzugsweise über eine geradlinige Kontur, wohingegen der zweite Lenker 18b vorzugsweise über eine gebogene, insbesondere L-förmig gebogene, Kontur verfügt.

An zweiten, freien Enden der beiden Lenker 18a, 18b greift die Abdeckeinrichtung 16 an, wobei es sich bei der Abdeckeinrichtung 16 vorzugsweise um eine Abdeckeinrichtung handelt, die aus mehreren gelenkig verbundenen Abdecksegmenten 16a, 16b, 16c besteht.

Ein Abdecksegment kann beispielsweise ein selbsttragendes plattenförmiges Element sein oder z.B. von einem rahmenartigen Element gebildet werden, welches mit einer Plane, Folie o.ä. bespannt ist. Ein entsprechender Rahmen kann beispielsweise aus Rohrbügeln bestehen.

Es kann Fig. 3c und 3j entnommen werden, dass das Abdecksegment 16a der Abdeckeinrichtung 16 gelenkig am zweiten Ende des ersten Lenkers 18a angreift, wohingegen das Abdecksegment 16c gelenkig am zweiten Ende des zweiten Lenkers 18b angreift, und wobei das Abdecksegment 16b mit diesen beiden Abdecksegmenten 16a, 16c jeweils gelenkig verbunden ist. Klappachsen 20 zwischen den Abdecksegmenten 16a, 16b und 16c der Abdeckeinrichtung 16 erstrecken sich ebenfalls horizontal und quer zur Fahrtrichtung der Erntemaschine bzw. Ernterichtung desselben, ebenso wie die Drehachsen 19a, 19b der Lenker 18a, 18b der Verlagerungseinrichtung 17. Der zweite Lenker 18b, der mit seinem ersten Ende am mittleren Abschnitt des ersten Lenkers 18a angreift, ist über einen dritten Lenker 18c ebenfalls an der Mittelmulde 12a des Vorsatzgeräts 12 angelenkt. Der dritte Lenker 18c greift einerseits mit einem Ende gelenkig an der Mittelmulde 12a und andererseits mit einem anderen Ende gelenkig an dem zweiten Lenker 18b an, nämlich an einem mittleren Abschnitt desselben.

Die Position der Drehachse 19a ist ortsfest und die Position der Drehachse 19b ist veränderlich. Auch die Klappachsen 20 verändern ihrer Position bei der Überführung der Schutzvorrichtung 15 zwischen der Ruheposition und der Funktionsposition.

In Fig. 3c und 3j ist weiterhin jeweils ein Hydraulikzylinder 21 zur Aktivierung der Verlagerungseinrichtung 17 der Schutzvorrichtung 15 gezeigt, wobei dieser Hydraulikzylinder 21 mit einem ersten Abschnitt an der Mittelmulde 12a angelenkt ist und einem gegenüberliegenden Ende an einem Lenker 22 gelenkig angreift, der seinerseits mit der Mittelmulde 12a und dem ersten Lenker 18a benachbart zum ersten Ende desselben gelenkig verbunden ist.

Das Ausführungsbeispiel der Fig. 3a bis 3j unterscheidet sich von den Ausführungsbeispielen der Fig. 1b bis 1h sowie 2a bis 2e insbesondere dadurch, dass zur Verlagerung der Schutzvorrichtung 15, ausgehend von der Ruheposition in die Funktionsposition das Vorsatzgerät 12 nicht bereits seine Transportstellung einnehmen muss. Vielmehr erreicht das Vorsatzgerät 12, wie dem Ablauf der Fig. 3a, 3d, 3f und 3h entnommen werden, erst dann seine Transportstellung, wenn die Schutzvorrichtung 15 bereits in ihre Funktionsposition überführt wurde.

Ein weiterer Unterschied des Ausführungsbeispiels der Fig. 3a bis 3j gegenüber den Ausführungsbeispielen der Fig. 1a bis 1h und 2a bis 2e besteht darin, dass im Ausführungsbeispiel der Fig. 3a bis 3j sich die Verlagerungseinrichtung 17 der Schutzvorrichtung 15 in der Ruheposition (Fig. 3c), ausgehend von der Abdeckeinrichtung 16 der Schutzvorrichtung 15 nach vorne erstreckt. In der Ruheposition der Schutzvorrichtung 15 sind die Abdeckeinrichtung 16 und die Verlagerungseinrichtung 17 der Schutzvorrichtung 15 oberhalb der Mittelmulde 12a des Vorsatzgeräts 12 positioniert, wobei die Abdeckeinrichtung 16 auch zumindest teilweise hinter der Mittelmulde 12a positioniert werden kann.

Wenn im vorstehenden Text teleskopartig verstellbare Verlagerungselemente genannt werden, so sind damit allgemein in der Länge verstellbare Elemente gemeint. Das können beispielsweise Teleskopgestänge, sich scherenartig oder über einen Knickmechanismus verlängernde bzw. verkürzende Verlagerungselemente oder andere entsprechend wirkende Elemente sein.

### Bezugszeichenliste

- 1: Erntemaschine
- 2: Vorsatzgerät
- 2a: Mittelmulde
- 2b: Ausleger
- 2c: Ausleger
- 3: Trägerfahrzeug
- 4: Mäh- und Einzugsorgan
- 5: Schutzvorrichtung
- 6: Abdeckeinrichtung
- 7: Verlagerungseinrichtung
- 8: Verlagerungselement
- 8a: Ende
- 8b: Ende
- 9: Drehachse
- 11: Erntemaschine
- 12: Vorsatzgerät
- 12a: Mittelmulde
- 12b: Ausleger
- 12c: Ausleger
- 13: Trägerfahrzeug
- 14: Mäh- und Einzugsorgan
- 15: Schutzvorrichtung
- 16: Abdeckeinrichtung
- 16a: Abdecksegment
- 16b: Abdecksegment
- 16c: Abdecksegment
- 17: Verlagerungseinrichtung
- 18: Verlagerungselement
- 18a: Lenker
- 18b: Lenker
- 18c: Lenker
- 19a: Drehachse
- 19b: Drehachse
- 20: Klappachse
- 21: Zylinder

## Patentansprüche

1. Schutzvorrichtung (5; 15) eines Vorsatzgeräts (2; 12) einer Erntemaschine, welches in einer Erntestellung des Vorsatzgeräts (2; 12) vorzugsweise eine Ruheposition einnimmt und Mäh- und Einzugsorgane (4; 14) des Vorsatzgeräts freigibt, und welches in einer Transportstellung des Vorsatzgeräts (2; 12) vorzugsweise eine Funktionsposition einnimmt und die Mäh- und Einzugsorgane (4; 14) des Vorsatzgeräts in Fahrtrichtung der Erntemaschine zumindest vorne begrenzt bzw. abdeckt, wobei die Schutzvorrichtung eine Abdeckeinrichtung (6; 16) zur Begrenzung bzw. Abdeckung der Mäh- und Einzugsorgane (4; 14) in der Funktionsposition und eine Verlagerungseinrichtung (7; 17) zur Verlagerung der Abdeckeinrichtung (6; 16) zwischen der Funktionsposition und der Ruheposition umfasst, **dadurch gekennzeichnet, dass** die Verlagerungseinrichtung (7; 17) um zumindest eine Drehachse ( 9; 19a, 19b) drehbar ist, die horizontal und quer zur Ernterichtung verläuft sowie hinter einer vorderen Kante der Mäh- und Einzugsorgane (4; 14) des Vorsatzgeräts (2; 12) positioniert ist, wobei die Abdeckeinrichtung (6; 16) in der Ruheposition in einem hinteren Abschnitt einer Mittelmulde (2a, 12a) des Vorsatzgeräts oberhalb derselben abgelegt ist.

2. Schutzvorrichtung nach Anspruch 1, **dadurch gekennzeichnet, dass** die Verlagerungseinrichtung (7) mindestens ein, vorzugsweise zu beiden Seiten der Abdeckeinrichtung (6) jeweils mindestens ein, in der Länge verstellbares Verlagerungselement (8) aufweist, welches an einem ersten Ende (8a) um die horizontal und quer zur Fahrtrichtung sowie hinter der vorderen Kante der Mäh- und Einzugsorgane (4) positionierte Drehachse (9) schwenkbar ist, und welches an einem zweiten Ende (8b) an der Abdeckeinrichtung (6) angreift.

3. Schutzvorrichtung nach Anspruch 2, **dadurch gekennzeichnet, dass** die Abdeckeinrichtung (6) ein Rollo ist, welches auf einer Rolloachse aufgewickelt ist, und welches zur Überführung in die Funktionsposition mit wenigstens einem Verlagerungselement (8) abwickelbar ist.

4. Schutzvorrichtung nach Anspruch 2, **dadurch gekennzeichnet, dass** die Abdeckeinrichtung (6) eine Plane oder Folie ist, welche an den Verlagerungselementen (8) angebunden ist.

5. Schutzvorrichtung nach Anspruch 3, **dadurch gekennzeichnet, dass** die Plane oder Folie in der Funktionsposition die Mäh- und Einzugsorgane (4) vorne und vorzugsweise zusätzlich oben und/oder seitlich begrenzt bzw. abdeckt.

6. Schutzvorrichtung nach einem der Ansprüche 2 bis 5, **dadurch gekennzeichnet, dass** die horizontal und quer zur Fahrtrichtung verlaufende Drehachse (9) der in der Länge verstellbaren Verlagerungselemente (8) im Bereich der Mittelmulde (2a) hinter den Mäh- und Einzugsorganen (4) des Vorsatzgeräts ausgebildet ist.

7. Schutzvorrichtung nach Anspruch 1, **dadurch gekennzeichnet, dass** die Verlagerungseinrichtung (15) ein Verlagerungsgestänge ist, welches mindestens zwei Lenker aufweist, nämlich einen ersten Lenker (18a) der mit einem Ende gelenkig an der Mittelmulde (12a) angreift und um eine erste horizontal und quer zur Fahrtrichtung verlaufende sowie hinter einer vorderen Kante der Mäh- und Einzugsorgane (14) des Vorsatzgeräts (12) positionierte Drehachse (19a) schwenkbar ist, sowie einen zweiten Lenker (18b), der mit einem ersten Ende an einem mittleren Abschnitt des ersten Lenkers (18a) angreift und um eine zweite horizontal und quer zur Fahrtrichtung verlaufende sowie hinter einer vorderen Kante der Mäh- und Einzugsorgane (14) des Vorsatzgeräts positionierte Drehachse (19b) schwenkbar ist, wobei die Abdeckeinrichtung an den Lenkern (18a; 18b) angreift.

8. Schutzvorrichtung nach Anspruch 7, **dadurch gekennzeichnet, dass** die Abdeckeinrichtung (16) einerseits an einem zweiten Ende des ersten Lenkers (18a) und andererseits an einem zweiten Ende des zweiten Lenkers (18b) angreift.

9. Schutzvorrichtung nach Anspruch 8, **dadurch gekennzeichnet, dass** die Abdeckeinrichtung (16) in der Funktionsposition die Mäh- und Einzugsorgane (14) ausschließlich vorne begrenzt bzw. abdeckt.

10. Schutzvorrichtung nach Anspruch 8 oder 9, **dadurch gekennzeichnet, dass** die Abdeckeinrichtung (16) mehrere gelenkig verbundene Abdecksegmente (16a, 16b, 16c) aufweist, von welchen ein erstes Abdecksegment (16a) gelenkig an einem zweiten Ende des ersten Lenkers (18a) und von denen ein zweites Abdecksegment (16c) gelenkig an einem zweiten Ende des zweiten Lenkers (18b) angreift.

11. Erntemaschine (1, 11) zum Ernten von stängelartigem Erntegut wie Mais oder dergleichen, mit einem mehrere Mäh- und Einzugsorgane (4; 14) aufweisenden Vorsatzgerät (2; 12), wobei das Vorsatzgerät eine feststehende Mittelmulde (2a, 12a) und zu beiden Seiten der Mittelmulde Ausleger (2b, 2c; 12b, 12c) aufweist, die bei der Überführung des Vorsatzgeräts (2; 12) zwischen einer Erntestellung und einer Transportstellung relativ zur Mittelmulde verlagerbar sind, **gekennzeichnet durch** eine Schutzvorrichtung (5; 15) nach einem der Ansprüche 1 bis 10.

## Claims

1. Protective device (5; 15) of a front attachment (2; 12) of a harvester, which, in a harvesting position of the front attachment (2; 12) preferably occupies a resting position and releases mowing and intake components (4; 14) of the front attachment and which, in a transport position of the front attachment (2; 12), preferably occupies an operating position and delimits or covers the mowing and intake components (4; 14), at least at the front, of the front attachment in the direction of travel of the harvester, wherein the protective device comprises a cover device (6; 16) for delimiting or covering the mowing and intake components (4; 14) in the operating position and a displacement device (7; 17) for displacing the cover device (6; 16) between the operating position and the resting position, **characterized in that** the displacement device (7; 17) is rotatable about at least one axis (9; 19a, 19b) which runs horizontal and transverse to the harvesting direction and is positioned behind a front edge of the mowing and intake components (4; 14) of the front attachment (2:12), wherein in the resting position the cover device (6; 16) is stored in a rear section of a central recess (2a, 12a), above the same, of the front attachment.

2. Protective device according to claim 1, **characterized in that** the displacement device (7) has at least one, preferably at least one on each of both sides of the cover device (6), longitudinally adjustable displacement component (8) which, at a first end (8a), is rotatable about the axis (9) which is horizontal and transverse to the direction of travel and positioned behind the front edge of the mowing and intake component (4), and which at a second end (8b) engages at the cover device (6).

3. Protective device according to claim 2, **characterized in that** the cover device (6) is a roller blind which is wound up on a roller blind axis and which can be unwound with at least one displacement component (8) for transfer into the operating position.

4. Protective device according to claim 2, **characterized in that** the cover device (6) is a tarpaulin or sheet which is attached to the displacement components (8).

5. Protective device according to claim 3, **characterized in that,** in the operating position, the tarpaulin or sheet delimits or covers the mowing and intake components (4) at the front and preferably additionally at the top and/or sides.

6. Protective device according to one of claims 2 to 5, **characterized in that** the axis (9) of the longitudinally displaceable displacement components (8), running horizontal and transverse to the direction of travel, is formed in the area of the central recess (2a) behind the mowing and intake components (4) of the front attachment.

7. Protective device according to claim 1, **characterized in that** the displacement device (15) is a displacement rod system which has at least two connecting rods, namely a first connecting rod (18a) which, with one end, engages in articulated manner at the central recess (12a) and is rotatable about a first axis (19a) which runs horizontal and transverse to the direction of travel and is positioned behind a front edge of the mowing and intake components (14) of the front attachment (12), as well as a second connecting rod (18b) which, with a first end, engages at a central section of the first connecting rod (18a) and is rotatable about a second axis (19b) which runs horizontal and transverse to the direction of travel and is positioned behind a front edge of the mowing and intake components (14) of the front attachment, wherein the cover device engages at the connecting rods (18a; 18b).

8. Protective device according to claim 7, **characterized in that** the cover device (16) on the one hand engages at a second end of the first connecting rod (18a) and on the other hand engages at a second end of the second connecting rod (18b).

9. Protective device according to claim 8, **characterized in that,** in the operating position, the cover device (16) delimits or covers the mowing and intake components (14) exclusively at the front.

10. Protective device according to claim 8 or 9, **characterized in that** the cover device (16) has several cover segments (16a, 16b, 16c) connected in articulated manner, a first cover segment (16a) of which engages in articulated manner at a second end of the first connecting rod (18a), and a second cover segment (16c) of which engages in articulated manner at a second end of the second connecting rod (18b).

11. Harvester (1, 11) for harvesting stalk-type crops such as maize or the like, with a front attachment (2; 12) having several mowing and intake components (4; 14), wherein the front attachment has a fixed central recess (2a, 12a) and, on both sides of the central recess, has arms (2b, 2c; 12b, 12c) which can be displaced relative to the central recess during the transfer of the front attachment (2; 12) between a harvesting position and a transport position, **characterized by** a protective device (5; 15) according to one of claims 1 to 10.

## Revendications

1. Dispositif de protection (5 ; 15) d'un outil frontal (2 ; 12) d'une machine de récolte, qui, dans une position de récolte de l'outil frontal (2 ; 12), adopte de préférence une position de repos et dégage des organes de moissonnage et d'alimentation (4 ; 14) de l'outil frontal, et qui, dans une position de transport de l'outil frontal (2 ; 12), adopte de préférence une position fonctionnelle et limite, respectivement recouvre les organes de moissonnage et d'alimentation (4 ; 14) de l'outil frontal au moins à l'avant par rapport au sens de la marche de la machine de récolte, le dispositif de protection comportant un équipement de recouvrement (6 ; 16) pour limiter, respectivement recouvrir les organes de moissonnage et d'alimentation (4 ; 14) dans la position fonctionnelle et un équipement de déplacement (7 ; 17) pour déplacer l'équipement de recouvrement (6 ; 16) entre la position fonctionnelle et la position de repos, **caractérisé en ce que** l'équipement de déplacement (7 ; 17) peut tourner autour d'au moins un axe de rotation (9 ; 19a, 19b) qui s'étend transversalement à la direction de récolte et est positionné derrière un bord avant des organes de moissonnage et d'alimentation (4 ; 14) de l'outil frontal (2 ; 12), l'équipement de recouvrement (6 ; 16) étant rangé, dans la position de repos, dans une portion arrière d'un auget central (2a, 12a) de l'outil frontal au-dessus de celui-ci.

2. Dispositif de protection selon la revendication 1, **caractérisé en ce que** l'équipement de déplacement (7) comporte au moins un élément de déplacement (8) qui est déplaçable en longueur, de préférence des deux côtés de l'équipement de recouvrement (6) et est pivotant à une première extrémité (8a) autour de l'axe de rotation (9) positionné horizontalement et transversalement au sens de la marche ainsi que derrière le bord avant des organes de moissonnage et d'alimentation (4) et qui agit sur l'équipement de recouvrement (6) au niveau d'une seconde extrémité (8b).

3. Dispositif de protection selon la revendication 2, **caractérisé en ce que** l'équipement de recouvrement (6) est un store qui est enroulé sur un axe de store et qui peut être déroulé avec au moins un équipement de déplacement (8) pour passer dans la position fonctionnelle.

4. Dispositif de protection selon la revendication 2, **caractérisé en ce que** l'équipement de recouvrement (6) est une bâche ou un film qui est fixé aux éléments de déplacement (8).

5. Dispositif de protection selon la revendication 3, **caractérisé en ce que**, dans la position fonctionnelle, la bâche ou le film limite, respectivement recouvre les organes de moissonnage et d'alimentation (4) à l'avant et de préférence, à titre supplémentaire, en haut et/ou latéralement.

6. Dispositif de protection selon une des revendications 2 à 5, **caractérisé en ce que** l'axe de rotation (9), s'étendant horizontalement et transversalement au sens de la marche, des éléments de déplacement (8) déplaçables en longueur est disposé dans la zone de l'auget central (2a) derrière les organes de moissonnage et d'alimentation (4) de l'outil frontal.

7. Dispositif de protection selon la revendication 1, **caractérisé en ce que** l'équipement de déplacement (15) est une tringlerie de déplacement qui comporte au moins deux bras, à savoir un premier bras (18a) qui, par une extrémité, agit de manière articulée sur l'auget central (12a) et est pivotant autour d'un premier axe de rotation (19a), lequel s'étend horizontalement et transversalement au sens de la marche et est positionné derrière un bord avant des organes de moissonnage et d'alimentation (14) de l'outil frontal (12), ainsi qu'un second bras (18b) qui, par une première extrémité, agit sur une portion médiane du premier bras (18a) et est pivotant autour d'un second axe de rotation (19b), lequel s'étend horizontalement et transversalement au sens de la marche et est positionné derrière un bord avant des organes de moissonnage et d'alimentation (14) de l'outil frontal, l'équipement de recouvrement agissant sur les bras (18a, 18b).

8. Dispositif de protection selon la revendication 7, **caractérisé en ce que** l'équipement de recouvrement (16) agit, d'une part, sur une seconde extrémité du premier bras (18a) et, d'autre part, sur une seconde extrémité du second bras (18b).

9. Dispositif de protection selon la revendication 8, **caractérisé en ce que**, dans la position fonctionnelle, l'équipement de recouvrement (16) délimite, respectivement recouvre les organes de moissonnage et d'alimentation (14) uniquement à l'avant.

10. Dispositif de protection selon la revendication 8 ou 9, **caractérisé en ce que** l'équipement de recouvrement (16) comporte plusieurs segments de recouvrement reliés de manière articulée (16a, 16b, 16c), dont un premier segment de recouvrement (16a) agit de manière articulée sur une seconde extrémité du premier bras (18a) et dont un second segment de recouvrement (16c) agit de manière articulée sur une seconde extrémité du second bras (18b).

11. Machine de récolte (1, 11) pour récolter du produit de récolte en tiges comme du maïs ou analogue, comprenant un outil frontal (2 ; 12) comportant plusieurs organes de moissonnage et d'alimentation (4 ; 14), l'outil frontal comportant un auget central fixe (2a, 12a) et, des deux côtés de l'auget central, des extensions (2b, 2c ; 12b, 12c) qui, lors du transfert de l'outil frontal (2 ; 12) entre une position de récolte et une position de transport, sont déplaçables par rapport à l'auget central, **caractérisée par** un dispositif de protection (5 ; 15) selon une des revendications 1 à 10.
